# EUROPÄISCHE PATENTSCHRIFT

(11) **EP 4 028 297 B1**
(45) Veröffentlichungstag und Bekanntmachung des Hinweises auf die Patenterteilung: **04.09.2024**
(21) Anmeldenummer: 20754197.0
(22) Anmeldetag: 05.08.2020
(51) Int. Cl.: B60W 30/095, B60W 30/09, B60W 50/14

(54) **VERFAHREN ZUR KOLLISIONSVERMEIDUNG IM STRASSENVERKEHR AUF BASIS EINER ADAPTIVEN FESTLEGUNG VON AUFENTHALTSBEREICHEN**
METHOD FOR AVOIDING A COLLISION IN ROAD TRAFFIC ON THE BASIS OF ADAPTIVELY SETTING OCCUPIED AREAS
PROCÉDÉ POUR ÉVITER UNE COLLISION DANS LE TRAFIC ROUTIER SUR LA BASE DE CONFIGURATION ADAPTATIVE DE ZONES OCCUPÉES

(30) Priorität: 09.09.2019 DE 102019124118
(43) Veröffentlichungstag der Anmeldung: 20.07.2022
(73) Patentinhaber: Valeo Schalter und Sensoren GmbH, 74321 Bietigheim-Bissingen (DE)
(72) Erfinder: ABBRUZZESI, Fabio, 74321 Bietigheim-Bissingen (DE); WUTTIG, Michael, 74321 Bietigheim-Bissingen (DE)
(74) Vertreter: Withopf, Kristina
(86) Internationale Anmeldenummer: PCT/EP2020/071959
(87) Internationale Veröffentlichungsnummer: WO 2021/047827

(56) Entgegenhaltungen:
- DE-A1- 102013 101 079
- DE-A1- 102017 103 700
- US-A1- 2018 099 665

## Beschreibung

Die vorliegende Erfindung betrifft ein Verfahren zur Vermeidung von Kollisionen eines sich bewegenden Fahrzeuges mit weiteren Verkehrsteilnehmern in der Fahrzeugumgebung, mindestens umfassend die Verfahrensschritte:
a) Erfassen der Fahrzeugumgebung und der darin befindlichen weiteren Verkehrsteilnehmer mittels eines oder mehrerer Sensoren;
b) Aufteilen der Fahrzeugumgebung in mehrere Aufenthaltsbereiche;
c) Klassifizieren der im Verfahrensschritt a) erfassten weiteren Verkehrsteilnehmer,
   wobei durch die Klassifizierung jedem der weiteren Verkehrsteilnehmer mindestens eine Verkehrsteilnehmergruppe zugeordnet wird;
d) Priorisierung der im Verfahrensschritt c) klassifizierten Verkehrsteilnehmer unter Berücksichtig sowohl der im Verfahrensschritt c) erfolgten Klassifizierung als auch des im Verfahrensschritt b) definierten Aufenthaltsbereiches, wobei Verkehrsteilnehmern aus einer oder mehreren vorbestimmten Verkehrsteilnehmergruppen in dem jeweiligen Aufenthaltsbereich eine hohe und Verkehrsteilnehmer aus anderen, nicht vorbestimmten Verkehrsteilnehmergruppen in dem jeweiligen Aufenthaltsbereich eine niedrigere Priorität zuerkannt wird; und
e) Bestimmung der Kollisionswahrscheinlichkeit der weiteren Verkehrsteilnehmer mit dem Fahrzeug, wobei die Bestimmung der Kollisionswahrscheinlichkeit in Abhängigkeit von der im Verfahrensschritt d) erfolgten Priorisierung erfolgt und die Kollisionswahrscheinlichkeit der weiteren Verkehrsteilnehmer mit hoher Priorität zuerst bestimmt wird;
f) Ändern oder Beibehalten des aktuellen Fahrverhalten des Fahrzeuges auf Basis der im Verfahrensschritt e) bestimmten Kollisionswahrscheinlichkeiten. Des Weiteren betrifft die vorliegende Erfindung ein Fahrunterstützungssystem eingerichtet zur Durchführung des erfindungsgemäßen Verfahrens sowie ein Fahrzeug mit einem derartig eingerichteten System.

Ein Ansatz zur Vereinfachung des heutigen Verkehrsalltags besteht darin, aufmerksamkeitsintensive und komplexe Tätigkeiten auf das Fahrzeug oder Fahrzeugsysteme selbst auszulagern. In der Vergangenheit ließ sich ein solches Vorgehen nur schwer umsetzen, da die technischen Möglichkeiten der verfügbaren Sensoren begrenzt und funktionale Lösungen dementsprechend nicht vorhanden oder ökonomisch nicht tragbar waren. Diese Nachteile wurden für viele Sensortypen in den letzten Jahren ausgeräumt, sodass prinzipiell kostengünstige und leistungsstarke Sensoren zur Verfügung stehen, welche auch für unübersichtliche Verkehrssituationen ein adäquates digitales Abbild erstellen können. Nachteilig ist jedoch, dass die Sensoren eher zu viele denn zu wenige Daten zur Verfügung stellen, sodass der nachgelagerten Datenverarbeitung eine immer größere Bedeutung zukommt. Letztere Aussage trifft dabei umso mehr für Verkehrsüberwachungsaufgaben zu, in denen eine Vielzahl unterschiedlicher Verkehrsgruppen mit unterschiedlichen Bewegungsprofilen und -Möglichkeiten vorliegen. Die Reduzierung und Strukturierung der vorhandenen Daten auf die Wichtigsten, innerhalb kürzester Zeit, ist dabei eine der Grundvoraussetzung, um von den involvierten Systemen autonom oder semiautonom richtige und sichere Entscheidungen zu erhalten.

In der Patentliteratur existiert eine Vielzahl unterschiedlicher Ansätze zur Überwachung aktueller Verkehrssituationen.

So beschreibt beispielsweise die EP 2 528 049 B1 ein Verfahren und eine Vorrichtung zum Erfassen sicherheitskritischer Objekte an einem Fahrzeug unter Verwendung einer Navigationsvorrichtung, wobei sicherheitskritische Objekte potenzielle Hindernisse für das Fahrzeug oder die Verkehrszeichen darstellen, welche für das Fahren des Fahrzeugs kritisch sind.

Weiterhin offenbart die EP 2 626 268 B1 ein Verfahren zum Schutz eines außen an einem Fahrzeug angeordneten Objektes, gekennzeichnet durch folgende Schritte:
a) Detektion eines Hindernisses, insbesondere der Position des Hindernisses, im Umfeld des Fahrzeugs durch ein geeignetes Sensorsystem,
b) Ermittlung der Fahrbewegung des Fahrzeugs,
c) Berechnung eines Fahrschlauchs für das außen am Fahrzeug angeordnete Objekt,
d) Ermittlung einer möglichen Kollision des außen am Fahrzeug angeordneten Objektes mit dem Hindernis durch Abgleichen des Fahrschlauchs mit der Position des Hindernisses.

Schließlich offenbart die DE10 2014 204 383 A1 ein Fahrerassistenzsystem zur Objekterkennung für ein Fahrzeug, wobei das Fahrerassistenzsystem aufweist: einen Prozessor; einen Sensor zum Aufnehmen von Einzelbildern einer Umgebung des Fahrzeuges; wobei der Prozessor dazu ausgeführt ist, aus einer simulierten Kritikalitätskarte einen Bereich als Bereich von Interesse zum Untersuchen auf kritische Objekte auszuwählen; wobei die simulierte Kritikalitätskarte mehrere Bereiche aufweist und in der Kritikalitätskarte jedem dieser Bereiche jeweils eine Latenzzeit zugeordnet ist; wobei die Latenzzeit einer Dauer entspricht, wie lange das Fahrerassistenzsystem den jeweiligen Bereich der Kritikalitätskarte maximal nicht untersucht lassen kann; und wobei der Prozessor dazu ausgeführt ist, den Bereich von Interesse basierend auf der zugehörigen Latenzzeit auszuwählen.

DE 10 2017 103 700 A1 offenbart ein Verfahren zum automatischen Vermeiden einer Kollision eines Kraftfahrzeugs mit zumindest einem fahrzeugexternen Objekt, mit den Schritten: Erfassen von das zumindest eine fahrzeugexterne Objekt betreffenden Objektdaten mittels einer ersten Sensorik des Kraftfahrzeugs, Erfassen von das Kraftfahrzeug betreffenden Fahrzeugdaten mittels einer zweiten Sensorik des Kraftfahrzeugs, Ermitteln der bevorstehenden Kollision des Kraftfahrzeugs mit dem zumindest einen fahrzeugexternen Objekt anhand der Objektdaten und der Fahrzeugdaten.

Derartige aus dem Stand der Technik bekannte Lösungen können noch weiteres Verbesserungspotential bieten, insbesondere hinsichtlich eines Verfahrens, welches schnell und reproduzierbar in der Lage ist, aus einer komplexen und unübersichtlichen Datenlage, die für die aktuelle Verkehrssituation relevanten Daten herauszufiltern und auf die der wichtigen Teilnehmer zu reduzieren.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung eine Lösung bereitzustellen, welche ressourcenschonend und in Echtzeit eine Datenverarbeitung von Sensordaten auch komplexerer Verkehrssituation ermöglicht.

Die Lösung der Aufgabe erfolgt durch die Merkmale der jeweiligen unabhängigen Ansprüche, gerichtet auf das erfindungsgemäße Verfahren, auf das erfindungsgemäße Fahrunterstützungssystem sowie das erfindungsgemäße Fahrzeug. Bevorzugte Ausgestaltungen der Erfindung sind in den Unteransprüchen, in der Beschreibung oder den Figuren beschrieben.

Erfindungsgemäß wird ein Verfahren zur Vermeidung von Kollisionen eines sich bewegenden Fahrzeuges mit weiteren Verkehrsteilnehmern in der Fahrzeugumgebung vorgeschlagen, wobei das Verfahren mindestens die Verfahrensschritte umfasst:
a) Erfassen der Fahrzeugumgebung und der darin befindlichen weiteren Verkehrsteilnehmer mittels eines oder mehrerer Sensoren;
b) Aufteilen der Fahrzeugumgebung in mehrere Aufenthaltsbereiche;
c) Klassifizieren der im Verfahrensschritt a) erfassten weiteren Verkehrsteilnehmer, wobei durch die Klassifizierung jedem der weiteren Verkehrsteilnehmer mindestens eine Verkehrsteilnehmergruppe zugeordnet wird;
d) Priorisierung der im Verfahrensschritt c) klassifizierten Verkehrsteilnehmer unter Berücksichtig sowohl der im Verfahrensschritt c) erfolgten Klassifizierung als auch des im Verfahrensschritt b) definierten Aufenthaltsbereiches, wobei Verkehrsteilnehmern aus einer oder mehreren vorbestimmten Verkehrsteilnehmergruppen in dem jeweiligen Aufenthaltsbereich eine hohe und Verkehrsteilnehmer aus anderen, nicht vorbestimmten Verkehrsteilnehmergruppen in dem jeweiligen Aufenthaltsbereich eine niedrigere Priorität zuerkannt wird; und
e) Bestimmung der Kollisionswahrscheinlichkeit der weiteren Verkehrsteilnehmer mit dem Fahrzeug, wobei die Bestimmung der Kollisionswahrscheinlichkeit in Abhängigkeit von der im Verfahrensschritt d) erfolgten Priorisierung erfolgt und die Kollisionswahrscheinlichkeit der weiteren Verkehrsteilnehmer mit hoher Priorität zuerst bestimmt wird;
f) Ändern oder Beibehalten des aktuellen Fahrverhalten des Fahrzeuges auf Basis der im Verfahrensschritt e) bestimmten Kollisionswahrscheinlichkeiten.

Ein derartiges Verfahren kann gegenüber den Lösungen aus dem Stand der Technik signifikante Vorteile aufweisen, insbesondere hinsichtlich der Verarbeitungsgeschwindigkeit und der Ressourcenanforderungen. Durch die erfindungsgemäße Verfahrensführung werden die Verkehrsteilnehmer in unterschiedliche Gruppen eingruppiert oder klassifiziert und die unterschiedlichen Aufenthaltsbereiche um das Fahrzeug herum nicht als solche, sondern in Abhängigkeit der Gruppenklassifikation ausgewertet. Es erfolgt also eine Zusammenschau einer räumlichen und einer typengewichteten Komponente. Durch diese Zusammenschau können die Daten derjenigen Teilnehmer besonders schnell herausgefiltert werden, welche in der aktuellen Fahrsituation überhaupt die Gefahr einer möglichen Kollision aufweisen. Die übrigen Verkehrsteilnehmer, welche entweder nicht in eine der priorisierten Eingruppierungen in dem betrachteten Aufenthaltsraum, auch bezeichnet als Bereich von Interesse ROI ("region of interest"), fallen oder aber sich in nicht relevanten Aufenthaltsräumen um das Fahrzeug herum befinden, werden vom Verfahren her mit einer geringeren Priorität verarbeitet. Durch diese Priorisierung liegen schneller Daten über wirklich relevante Verkehrsteilnehmer in der Umgebung des Fahrzeuges vor. Das Fahrzeug oder der Fahrzeugführer können durch das Verfahren also schneller auf potentielle Kollisionsgefahren reagieren und demzufolge auch schneller Maßnahmen ergreifen um einer solchen Kollisionsgefahr wirksam entgegenzuwirken. Somit kann mit einem minimalen Ressourceneinsatz ein hoch effizientes Verfahren zur Vermeidung von Unfällen geschaffen werden. Es können im Vergleich zum Stand der Technik kürzere Eingreifzeiten realisiert und weniger schnelle Systeme zur Datenverarbeitung eingesetzt werden.

Das erfindungsgemäße Verfahren ist ein Verfahren zur Vermeidung von Kollisionen eines sich bewegenden Fahrzeuges mit weiteren Verkehrsteilnehmern in der Fahrzeugumgebung. Kollisionen im Sinne der Erfindung sind ungewollte physische Kontakte zwischen unterschiedlichen Verkehrsteilnehmern, wie beispielsweise ein Aufprall zwischen zwei Fahrzeugen oder zwischen einem Fahrzeug und einem Fußgänger. Üblicherweise wird diese Art der Kollision als Unfall bezeichnet. Fahrzeuge können dabei insbesondere motorbetriebene Kraftfahrzeuge wie beispielsweise PKW, Busse oder Lastkraftwagen sein. Das Fahrzeug befindet sich dabei in Bewegung, wenn es eine Mindestgeschwindigkeit von ungleich 0 km/h aufweist. Die weiteren Verkehrsteilnehmer sind beispielsweise Fußgänger, Fahrradfahrer oder weitere Fahrzeuge. Die Fahrzeugumgebung des Fahrzeuges kann beispielsweise als die Umgebung definiert werden, welche sich in Reichweite der verwendeten Sensoren um das Fahrzeug herum erstreckt. Beispielsweise kann die Fahrzeugumgebung durch die Straßen und Wege um das Fahrzeug herum gebildet werden und sich zusammen mit den ortsfesten Bauten, wie beispielsweise Häusern, radial um das Fahrzeug herum erstrecken, wobei der Radius bevorzugt 500 m, des Weiteren bevorzugt 300 m und weiterhin bevorzugt 250 m betragen kann.

Im Verfahrensschritt a) erfolgt das Erfassen der Fahrzeugumgebung und der darin befindlichen weiteren Verkehrsteilnehmer mittels eines oder mehrerer Sensoren. Durch die Verwendung einer oder mehrerer Sensoren wird ein digitales Abbild der derzeitigen Verkehrssituation um das Fahrzeug herum erfasst und zumindest die Position und die aktuelle Bewegungsrichtung der unterschiedlichen Verkehrsteilnehmer in der Fahrzeugumgebung bestimmt. Zudem können beispielsweise über GPS-Sensoren die Straßenverläufe in der Fahrzeugumgebung bestimmt werden, sodass sich in Summe ein digitales Abbild der Straßen inklusive der sich darin aufhaltenden weiteren Verkehrsteilnehmer ergibt. Mögliche Sensoren sind beispielsweise LIDAR-, Ultraschall- oder RADAR-Sensoren oder optische Kameras, welche einzeln oder in Zusammenschau die Verkehrsumgebung digital abbilden. Es ist möglich, dass die unterschiedlichen Sensoren an unterschiedlichen Fahrzeugstellen angebracht sind, sodass die unterschiedlichen Sensoren jeweils andere Ausschnitte der Fahrzeugumgebung überwachen. Zudem können die Sensoren die Fahrzeugumgebung in regelmäßigen zeitlichen Abständen überwachen, sodass nicht nur der Aufenthaltsort der weiteren Verkehrsteilnehmer, sondern auch deren Eigenbewegung oder Ortsänderung als Funktion der Zeit erfasst wird.

Im Verfahrensschritt b) erfolgt ein Aufteilen der Fahrzeugumgebung in mehrere Aufenthaltsbereiche. Die durch die Sensoren erfassbare Fahrzeugumgebung wird also in unterschiedliche räumliche Bereiche aufgeteilt, wobei sich die jeweiligen Bereiche in ihren Ortskoordinaten unterscheiden. Beispielweise können die Aufenthaltsbereiche als Funktion der Fahrzeugbewegung in einen hinteren, einen vorderen und zwei seitliche Bereiche aufgeteilt werden, wobei sich die jeweiligen Bereiche von den entsprechenden Fahrzeugachsen aus erstrecken. Die Aufenthaltsbereiche können aber auch als Funktion der jeweils vorhandenen Sensoren definiert werden und sich mehr oder weniger symmetrisch vom Fahrzeug aus in den Sensorraum hinein erstrecken. Die Definition der Aufenthaltsbereiche kann auch dynamisch, beispielsweise als Funktion der Geschwindigkeit des Fahrzeuges oder aber als Funktion der Tageszeit oder der Beleuchtungssituation erfolgen. Bevorzugt können dabei mehr als zwei, weiter bevorzugt mehr als 4 und weiter bevorzugt mehr als 6 unterschiedliche Aufenthaltsbereiche für eine Fahrzeugumgebung definiert werden. Die unterschiedlichen Aufenthaltsbereiche müssen dabei nicht gleich groß sein und diese müssen sich auch nicht symmetrisch um das Fahrzeug erstrecken. Es ist des Weiteren möglich, dass die Aufenthaltsbereiche als Funktion der Sensoreichweiten und als Funktion der aktuellen Straßen- und Umgebungskarte gewählt werden. Beispiele für unterschiedliche Aufenthaltsbereiche sind in den Figuren dargestellt.

Im Verfahrensschritt c) erfolgt ein Klassifizieren der im Verfahrensschritt a) erfassten weiteren Verkehrsteilnehmer, wobei durch die Klassifizierung jedem der weiteren Verkehrsteilnehmer mindestens eine Verkehrsteilnehmergruppe zugeordnet wird. Über die Sensoren wird neben der Straßenführung auch die Anwesenheit weiterer Verkehrsteilnehmer in der Fahrzeugumgebung festgestellt. In diesem Schritt werden die einzelnen, weiteren Verkehrsteilnehmer jeweils einer Gruppe zugeordnet, sie werden klassifiziert. Die Zuordnung zu einer Gruppe kann beispielsweise anhand des Bewegungsprofils, der momentanen Geschwindigkeit oder aber auch auf Basis der Größe der Objekte erfolgen. Zweckmäßigerweise kann eine Klassifizierung auf Basis des Bewegungsprofils erfolgen und so lassen sich beispielsweise Verkehrsteilnehmergruppen wie Fußgänger, Fahrradfahrer, Autos, LKWs, Busse, E-Scooter, Motorräder usw. unterschieden. Diese Verkehrsteilnehmergruppen zeichnen sich durch unterschiedliche Beweglichkeiten oder Geschwindigkeiten aus und können dadurch zu jeweils einheitlichen Gruppen zusammengefasst werden.

Im Verfahrensschritt d) erfolgt eine Priorisierung der im Verfahrensschritt c) klassifizierten Verkehrsteilnehmer unter Berücksichtig sowohl der im Verfahrensschritt c) erfolgten Klassifizierung als auch des im Verfahrensschritt b) definierten Aufenthaltsbereiches, wobei Verkehrsteilnehmern aus einer oder mehreren vorbestimmten Verkehrsteilnehmergruppen in dem jeweiligen Aufenthaltsbereich eine hohe und Verkehrsteilnehmer aus anderen, nicht vorbestimmten Verkehrsteilnehmergruppen in dem jeweiligen Aufenthaltsbereich eine niedrigere Priorität zuerkannt wird. Die Priorisierung der einzelnen, weiteren Verkehrsteilnehmer erfolgt also unter Zusammenschau sowohl der örtlichen Zuordnung zu einem bestimmten Aufenthaltsbereich als auch unter gleichzeitiger Berücksichtigung der zuvor erfolgten Klassifizierung. So kann beispielsweise eine Priorisierung in Summe sehr naher Verkehrsteilnehmer im selben Aufenthaltsbereich ergeben, dass diesen für die aktuelle Fahrsituation eine unterschiedliche Wertigkeit, eine unterschiedliche Priorität, zuerkannt wird. Beispielsweise können innerhalb eines gemeinsamen fahrzeugnahen Bereiches bevorzugt diejenigen Verkehrsteilnehmer herausgegriffen werden, welche sich besonders schnell bewegen, beispielsweise weitere Fahrzeuge oder Motorräder. Diese sind in die jeweiligen Klasen eingeordnet und erhalten aufgrund der örtlichen Nähe und ihrer Klassenzugehörigkeit für das Verfahren eine hohe Priorität. Anderseits können beispielsweise Fußgänger in eher entfernten Aufenthaltsbereichen im Vergleich zu weiteren Kraftfahrzeugen eine geringere Priorität zuerkannt werden.

Im Verfahrensschritt e) erfolgt eine Bestimmung der Kollisionswahrscheinlichkeit der weiteren Verkehrsteilnehmer mit dem Fahrzeug, wobei die Bestimmung der Kollisionswahrscheinlichkeit in Abhängigkeit von der im Verfahrensschritt d) erfolgten Priorisierung erfolgt und die Kollisionswahrscheinlichkeit der weiteren Verkehrsteilnehmer mit hoher Priorität zuerst bestimmt wird. Die Bestimmung der Wichtigkeit der detektierten weiteren Verkehrsteilnehmer erfolgt innerhalb des erfindungsgemäßen Verfahrens in Abhängigkeit der zugeordneten Priorität. Befindet sich ein Verkehrsteilnehmer innerhalb eines definierten Aufenthaltsbereiches und gehört dieser zu einer vordefinierten Klasse, so wird dieser vom Verfahren früher behandelt als die übrigen Verkehrsteilnehmer, welche eine niedrigere Priorität aufweisen. Die weiteren Verkehrsteilnehmer in anderen Gruppen werden zeitlich also erst dann betrachtet, wenn die zu den priorisierten Gruppen gehörenden Verkehrsteilnehmer abgehandelt wurden. So ist es beispielsweise auch möglich, dass in einem weit entfernten Aufenthaltsbereich die Fußgänger gar nicht vom Verfahren behandelt werden, da die von diesen entfernten Fußgängern ausgehende Kollisionsgefahr vernachlässigbar ist. Die Priorisierung ermöglicht im erfindungsgemä-ßen Falle eine zeitliche Abstufung in der Abarbeitung und/oder eine Festlegung, ob diese Verkehrsteilnehmer überhaupt im Rahmen des Verfahrens betrachtet werden.

Im Verfahrensschritt f) erfolgt ein Ändern oder Beibehalten des aktuellen Fahrverhalten des Fahrzeuges auf Basis der im Verfahrensschritt e) bestimmten Kollisionswahrscheinlichkeiten. Basierend auf den aktuellen Aufenthaltsbereichen und den darin detektierten Verkehrsteilnehmer, sowie deren Klassenzugehörigkeit wurde also eine Kollisionswahrscheinlichkeit bestimmt, welche zu einer Änderung des aktuellen Fahrverhaltens Anlass geben kann. Ist die Kollisionswahrscheinlichkeit hoch, so kann beispielsweise eine Warnung an den Fahrzeugführer ausgegeben oder die Beschleunigung verringert oder ein autonomer Bremsvorgang eingeleitet werden. Zeigt die Kollisionswahrscheinlichkeit eine ungefährliche Verkehrssituation an, so kann beispielsweise das aktuelle Fahrverhalten beibehalten werden. Die Entscheidung zur Änderung oder Beibehaltung des aktuellen Fahrverhaltens kann zudem noch durch weitere Einflussfaktoren, wie beispielsweise Blinken und/oder Lenkbewegungen des Fahrzeuges beeinflusst werden. Dadurch lassen sich auch durch den Fahrzeugführer induzierte Änderungen der unmittelbar zukünftigen Fahrsituation des Fahrzeuges mit einbeziehen.

In einer bevorzugten Ausführungsform des Verfahrens kann die Aufteilung der Aufenthaltsbereiche im Verfahrensschritt b) unter Verwendung einer Umgebungskarte der aktuellen Fahrzeugumgebung des Fahrzeuges erfolgen. Neben der sensorgestützten Auswahl der Aufenthaltsbereiche kann insbesondere der Einbezug einer aktuellen Umgebungskarte zu einer situationsgerechteren Aufteilung der Aufenthaltsbereiche beitragen. Die Straßenführung in der Umgebung des Fahrzeuges kann dabei insbesondere beitragen, besondere Gefahrenstellen, wie beispielsweise Kreuzungen oder Einmündungen, zu identifizieren und diesen Stellen in der Definition der Aufenthaltsbereiche ein besonderes Gewicht zu geben. So können beispielsweise auf einer Autobahn verstärkt die in Fahrtrichtung liegenden Bereiche unterteilt und die seitlichen und rückwärtigen Bereiche eher weniger betrachtet werden. Dies kann zu einer besonders spezifischen und damit risikoadaptierten Aufteilung der Aufenthaltsbereiche führen.

In einer weiteren bevorzugten Ausgestaltung des Verfahrens kann die Aufteilung der Fahrzeugumgebung im Verfahrensschritt b) als Funktion der Geschwindigkeit des Fahrzeuges erfolgen. Es hat sich als besonders vorteilhaft erwiesen, die Aufteilung der unterschiedlichen Aufenthaltsbereiche nicht nur als Funktion der Sensorreichweiten, sondern auch als Funktion der aktuellen Fahrzeuggeschwindigkeit zu wählen. Durch den Einbezug der aktuellen Fahrzeuggeschwindigkeit können beispielsweise typische Stadt- , Landstraßen- oder Autobahnfahrten unterschieden werden, wobei diesen Situationen Gefahrenpotentiale der verschiedenen Verkehrsteilnehmergruppen entsprechen. Auf diese Art und Weise kann ein besonders schnelles und adaptives Verfahren durchgeführt werden.

Weiterhin kann in einem bevorzugten Aspekt des Verfahrens die Aufteilung der Fahrzeugumgebung im Verfahrensschritt b) symmetrisch zur Fahrzeugbewegungsrichtung in mindestens 3 unterschiedliche Aufenthaltsbereiche erfolgen. Zum Erhalt eines möglichst schnellen Systems, welches auch in komplexen Verkehrssituationen eine hinreichende Unterscheidung und Aufteilung der Aufenthaltsbereiche und weiteren Verkehrsteilnehmer ermöglicht, hat sich eine Aufteilung in 3 Bereiche als besonders effizient erwiesen. Somit werden sowohl die Verfahrensabläufe im besonderen Maße optimiert als auch eine sichere Unterscheidung unterschiedlicher Verkehrsteilnehmer gewährleistet.

Im Rahmen einer weiteren Ausgestaltung des Verfahrens kann die Priorisierung der weiteren Verkehrsteilnehmer im Verfahrensschritt d) zusätzlich unter Berücksichtigung des aktuellen Bewegungsprofils des weiteren Verkehrsteilnehmers erfolgen. Neben der statischen Einordnung in die unterschiedlichen Klassen an Verkehrsteilnehmern kann der Einbezug des aktuellen Bewegungsmusters des weiteren Verkehrsteilnehmers einen weiteren Beitrag zur situationsgerechten Priorisierung des Verkehrsteilnehmers und der späteren Risikobewertung liefern. So können beispielsweise sich nicht bewegende Fußgänger mit einem Abschlag in der Risikobewertung oder aber mit einer geringeren Priorität versehen werden. Letzteres würde in diesem Verfahrensschritt eine Unterscheidung zwischen unterschiedlichen Fußgängern in einem Aufenthaltsbereich ermöglichen. Beispielsweise kann auch mit in die Priorisierung einbezogen werden, ob sich der Fußgänger auf das Fahrzeug zu oder sich von diesem fortbewegt. In Abhängigkeit der Wichtung dieser weiteren Faktoren kann der einzelne Fußgänger im Aufenthaltsbereich dann eine höhere oder niedrigere Priorität erhalten. Dieser Schritt kann zu einer weiteren situationsgerechten Differenzierung im Rahmen des erfindungsgemäßen Verfahrens beitragen.

Innerhalb einer bevorzugten Charakteristik des Verfahrens kann die Bestimmung der Kollisionswahrscheinlichkeit im Verfahrensschritt e) für weitere Verkehrsteilnehmer mit niedrigerer Priorität nicht durchgeführt werden. Zum Erhalt eines Verfahrens, welches besonders schnelle Entscheidungen mit einem Höchstmaß an Sicherheit erlaubt, hat es sich als vorteilhaft herausgestellt, dass als niedrig priorisierte Verkehrsteilnehmer im weiteren Verfahrensverlauf überhaupt nicht berücksichtigt werden. Dies kann den Verfahrensablauf weiter beschleunigen und schneller Ressourcen für die relevanten weiteren Verkehrsteilnehmer bereitstellen.

In einer weiteren, bevorzugten Ausgestaltung des Verfahrens können die Verkehrsteilnehmergruppen im Verfahrensschritt c) aus der Gruppe bestehend aus Fußgängern, Elektro-Scooter, elektrischen oder nicht elektrischen Fahrrädern, PKW, LKW ausgesucht sein. Diese Einteilung an weiteren Verkehrsteilnehmern kann zu einer besonders effizienten Berücksichtigung der unterschiedlichen Bewegungsprofile und somit zu einer besonders signifikanten Risikobetrachtung beitragen. Die Anzahl an unterschiedlichen Klassifikationen ist dabei nicht zu hoch, sodass die aktuelle Verkehrssituation in einem einfachen aber signifikanten Modell abgebildet werden kann.

In einer weiteren, bevorzugten Ausführungsform des Verfahrens können die Sensoren in Verfahrensschritt a) aus der Gruppe bestehend aus optischen Sensoren, LIDAR, Radar, GPS oder Kombinationen mindestens zweier Sensortypen daraus ausgesucht sein. Diese Auswahl an unterschiedlichen Sensoren kann zu einer besonders effizienten Überwachung der Verkehrssituation im Rahmen des erfindungsgemäßen Verfahrens beitragen. Die zeitliche Auflösung ist auch für sich schnell bewegende Objekte geeignet und aufgrund der anfallenden Datenmengen kann das erfindungsgemäße Verfahren zu einer besonders hohen Effizienzsteigerung beitragen.

Des Weiteren erfindungsgemäß ist ein Fahrunterstützungssystem, mindestens aufweisend eine Steuereinheit, einen Front- und einen seitlichen Sensor, wobei die Steuereinheit im elektrischen Kontakt zu den Sensoren steht und wobei die Steuereinheit dazu eingerichtet ist das erfindungsgemäße Verfahren auszuführen. Insbesondere kann das Fahrunterstützungssystem weiterhin ein GPS-Modul aufweisen, wobei die Steuereinheit dann auch im elektrischen Kontakt zum GPS-Modul steht. Das erfindungsgemäße Verfahren eignet sich insbesondere zur Durchführung im Rahmen eines Fahrunterstützungssystems. Das Verfahren kann insbesondere dazu beitragen, dass das die Bewegung im Verkehrsraum sicherer wird, wobei das Risiko ungewollter Kollisionen deutlich verringert wird. Dazu trägt insbesondere die oben angegebene Sensoranordnung in Verbindung mit der Steuereinheit bei. Zu den weiteren Vorteilen des erfindungsgemäßen Fahrunterstützungssystems wird des Weiteren explizit auf die Vorteile des erfindungsgemäßen Verfahrens verwiesen.

Des Weiteren erfindungsgemäß ist ein Fahrzeug mit einem erfindungsgemäßen Fahrunterstützungssystem. Bezüglich der Vorteile eines erfindungsgemäßen Fahrzeugs mit einem erfindungsgemäßen Fahrunterstützungssystem wird insbesondere auf die Vorteile des erfindungsgemäßen Verfahrens hingewiesen.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken.

Es zeigen die
Fig. 1 eine schematische Darstellung einer erfindungsgemäßen Aufteilung einer aktuellen Verkehrssituation in unterschiedliche Aufenthaltsbereiche;
Fig. 2 eine weitere schematische Darstellung einer erfindungsgemäßen Aufteilung einer aktuellen Verkehrssituation in unterschiedliche Aufenthaltsbereiche;
Fig. 3 eine schematische Darstellung einer erfindungsgemäßen Aufteilung einer aktuellen Verkehrssituation in unterschiedliche Aufenthaltsbereiche;
Fig. 4 eine schematische Darstellung einer erfindungsgemäßen Aufteilung einer aktuellen Verkehrssituation in unterschiedliche Aufenthaltsbereiche;
Fig. 5 eine schematische Darstellung einer erfindungsgemäßen Aufteilung einer aktuellen Verkehrssituation in unterschiedliche Aufenthaltsbereiche;
Fig. 6 eine schematische Darstellung eines erfindungsgemäßen Ablaufdiagramms für das erfindungsgemäße Verfahren;
Fig. 7 schematisch ein mögliches Ablaufdiagramm des erfindungsgemäßen Verfahrens; und
Fig. 8 eine schematische Darstellung eines Fahrzeuges mit einem erfindungsgemäßen Fahrunterstützungssystem.

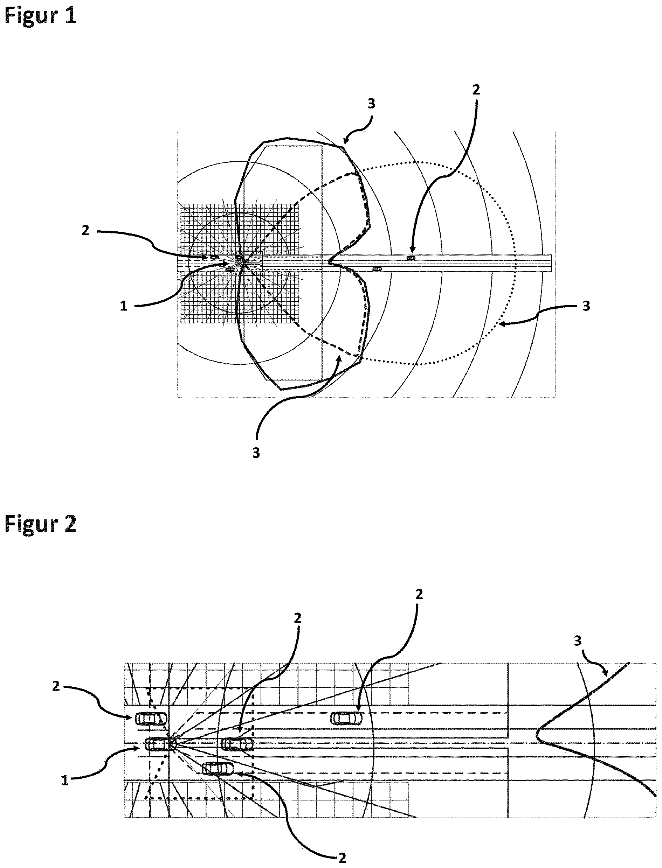

Die Figur 1 zeigt eine mögliche Aufteilung von Aufenthaltsbereichen für ein sich bewegendes Fahrzeug 1 auf einer Fahrbahn. Im der näheren Umgebung des sich bewegenden Fahrzeugs 1 befinden sich weitere Verkehrsteilnehmer 2. Es ist dargestellt, dass der Straßenverlauf und somit die nähere Fahrzeugumgebung beispielsweise in drei unterschiedliche Aufenthaltsbereiche 3 unterteilt ist. Die einzelnen Aufenthaltsbereiche 3 erstrecken sich symmetrisch zur Fahrzeugachse jeweils in Fahrtrichtung. Ein Aufenthaltsbereich 3 erstreckt sich im Wesentlichen in Fahrtrichtung nach vorne und in diesem liegen dann weiter entfernte Verkehrsteilnehmer 2. Der Aufenthaltsbereich 3 besitzt eine keulenähnliche Form. Der Aufenthaltsbereich 3 kann beispielsweise eine Ausdehnung von bis zu 175 m in Fahrtrichtung des sich bewegenden Fahrzeuges 1 erreichen und kann beispielsweise durch LIDAR- oder RADAR-Sensoren 12, 13 überwacht werden. Ein zweiter Aufenthaltsbereich 3 kann beispielsweise eine mittlere Entfernung vom sich bewegenden Fahrzeug 1 erfassen, wobei beispielsweise ein besonderes Augenmerk auf die Seitenbereiche gerichtet ist. Dieser Bereich weist dementsprechend nicht eine Keulenform, sondern eher eine schmetterlingsähnliche Form auf. Der dritte Aufenthaltsbereich 3 kann beispielsweise den zweiten Aufenthaltsbereich 3 und zusätzlich noch die Seitenbereiche des sich bewegenden Fahrzeuges 1 umfassen. Die seitliche Ausdehnung dieses dritten Bereiches 3 ist aus diesem Grund größer als die Ausdehnung in Vorwärtsrichtung. Die laterale Ausdehnung dieses Bereiches kann beispielsweise 100 m betragen.

Die Figur 2 zeigt einen Nahbereichsausschnitt der Figur 1. Dargestellt ist, dass sich relativ zum sich bewegenden Fahrzeug 1 noch weitere Fahrzeuge 2 auf der Fahrbahn befinden, wobei sich die Fahrzeuge 2 einem oder mehreren der Aufenthaltsbereiche 3 zuordnen lassen.

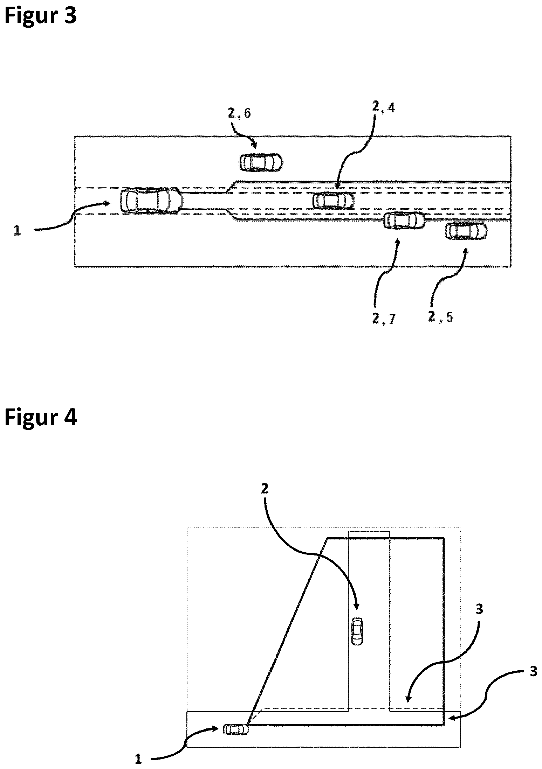

Die Figur 3 zeigt einen Ausschnitt aus der Figur 1 und der Figur 2. Dargestellt ist das sich bewegende Fahrzeug 1 mit einem Ausschnitt der Fahrzeugumgebung, wobei das Fahrzeug 1 auf einer geraden Straße fährt. Das sich bewegende Fahrzeug 1 ist mit Sensoren zur Umgebungsüberwachung und einem nicht dargestellten GPS-Sensor 11 ausgestattet. Basierend auf der aktuellen Geschwindigkeit des sich bewegenden Fahrzeugs 1, der GPS-Position und somit der aktuellen Fahrbahnsituation kann eine situationsangepasste Aufteilung der Aufenthaltsbereiche 3 erfolgen. Auf Basis der aktuellen Fahrzeuggeschwindigkeit des sich bewegenden Fahrzeuges 1 kann eine Klassifizierung beispielsweise nur die Gruppen PKW, Motorräder oder LKW beinhalten und Fußgänger und Fahrradfahrer ausschließen. Ein Aufenthaltsbereich 3 ist beispielsweise durch die durchgezogenen Linien und ein weiterer Aufenthaltsbereich durch die gestrichelt dargestellten Linien aufgezeigt. Die Fahrzeuge 6 und 5 befinden sich außerhalb der beiden Bereiche und demzufolge kann diesen Fahrzeugen 2 eine niedrigere Priorität zuerkannt werden. Das Fahrzeug 7 befindet sich halb innerhalb eines der Aufenthaltsbereiche und basierend auf der aktuellen Bewegungsrichtung des Fahrzeuges 7 kann diesem zusätzlich eine höhere Priorität zuerkannt werden. Das Fahrzeug 4 liegt sowohl im Aufenthaltsbereich 2 wie auch 3 und insofern kann diesem Fahrzeug 2 die höchste Priorität zuerkannt werden.

Die Figur 4 zeigt eine andere Verkehrssituation für das sich bewegende Fahrzeug 1, beispielsweise in einem innerstädtischen Bereich. Dargestellt ist eine Verkehrsführung, in welcher eine Straße von links in eine geradeaus verlaufende Straße einmündet. Basierend auf dieser Straßenführung können die Aufenthaltsbereiche 3 so gewählt werden, dass hauptsächlich die Seiten zur Fahrtrichtung des sich bewegenden Fahrzeuges 1 abgedeckt sind. Ein Bereich kann den Nah- und ein weiterer den Fernbereich abdecken. In dieser Ausgestaltung erhalten beispielsweise nur Fahrzeuge 2 eine hohe Priorität und als Fußgänger und Fahrradfahrer klassifizierte Objekte fallen aus den weiteren Betrachtungen aufgrund niedriger Priorität heraus. Insofern wird das Fahrzeug 2 mit einer hohen Priorität versehen, da es sich im Aufenthaltsbereich 3 aufhält und zu der Gruppe der Fahrzeuge zugehörig klassifiziert wurde. Auf Basis dieser Einteilung wird die Kollisionswahrscheinlichkeit berechnet und basierend auf den Relativgeschwindigkeiten kann ein Bremsvorgang für das sich bewegende Fahrzeug 1 autonom eingeleitet werden.

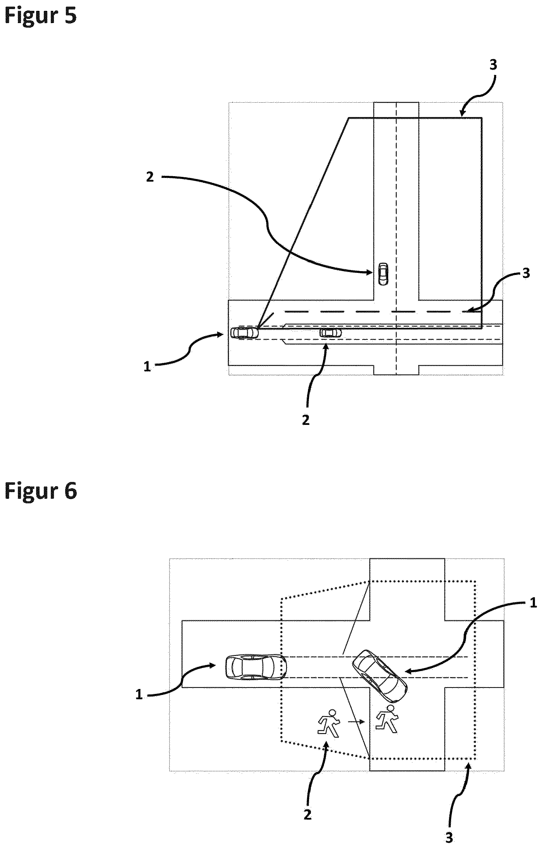

Die Figur 5 zeigt ebenfalls eine innerstädtische Fahrsituation, wobei sich das bewegende Fahrzeug 1 und ein weiteres als Fahrzeug 2 klassifiziertes Objekt sich mit vergleichbarer Geschwindigkeit, aber ausreichendem Abstand zueinander bewegen. Ein weiteres Fahrzeug 2 nähert sich aus einem anderen Aufenthaltsbereich 3 mit hoher Geschwindigkeit von links. Basierend auf der Definition der Aufenthaltsbereiche 3, der Klassifizierung der Objekte und der Relativbewegung der einzelnen Objekte kann demzufolge dem linken Fahrzeug 2 eine höhere Priorität zugewiesen werden, wobei die Kollisionswahrscheinlichkeit dieses Objektes vorrangig berechnet wird. Basierend auf der errechneten Kollisionswahrscheinlichkeit kann das sich bewegende Fahrzeug 1 beschleunigt oder abgebremst werden, um eine mögliche Kollision zu vermeiden.

Die Figur 6 zeigt eine weitere Verkehrssituation im innerstädtischen Bereich, wobei für das sich bewegende Fahrzeug 1 eine Abbiegesituation ansteht. Letzteres kann sich beispielsweise aus der Geschwindigkeit in Kombination mit dem Setzen eines Blinkers ergeben. Eine mögliche Aufteilung in unterschiedliche Aufenthaltsbereiche 3 ist durch die unterschiedlich formatierten Linien angezeigt. Auf Basis der Geschwindigkeit und des Blinkens werden nur als Fußgänger 2 klassifizierte Objekte mit einer hohen Priorität versehen. Zusätzlich zur Priorisierung kann auch noch die Bewegungsrichtung und -Geschwindigkeit zur Festlegung der endgültigen Priorität herangezogen werden. Fährt das sich bewegende Fahrzeug 1 geradeaus, kann der Fußgänger 2, obwohl im Aufenthaltsbereich und in der richtigen Klasse, mit einer niedrigeren Priorität versehen werden. Die Situation ändert sich natürlich im Falle eines Abbiegens des sich bewegenden Fahrzeuges 1, wie oben beschrieben.

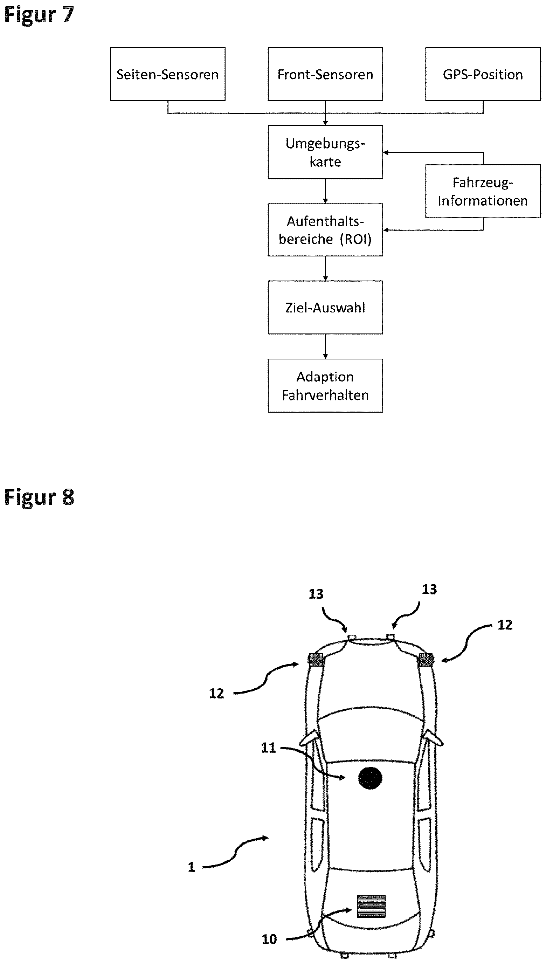

Die Figur 7 zeigt schematisch ein mögliches Ablaufdiagramm des erfindungsgemäßen Verfahrens. Über verschiedene Sensoren 12, 13 und über die Bestimmung der GPS-Position 11 wird ein digitales Abbild der Umgebungskarte erstellt. Die hier aufgeführten Sensortypen 12, 13 ermöglichen dabei jeweils die Überwachung unterschiedlicher Umgebungsbereiche des Fahrzeuges 1. Als mögliche Sensoren 12, 13 kommen dabei beispielsweise RADR- oder LIDAR-Sensoren in Betracht. Die Umgebungskarte enthält dabei unter anderem die Informationen über die aktuelle Position des sich bewegenden Fahrzeugs 1, mögliche Verkehrsteilnehmer 2 in der Umgebung des Fahrzeuges 1, Stra-ßenverlauf inklusive Kreuzungen, Einmündungen, Fahrradwege, Straßenschilder etc.. Als Funktion der Umgebungskarte und vorliegender Fahrzeuginformationen, wie beispielsweise der Geschwindigkeit oder über Blinker oder Lenkbewegungen angezeigte, mögliche Richtungsänderungen des sich bewegenden Fahrzeugs 1, werden die auf die aktuelle Fahrsituation adaptierten Aufenthaltsbereiche ROI 3 festgelegt. Es erfolgt dann auf Basis der Aufenthaltsbereiche 3 eine Zuordnung der weiteren Verkehrsteilnehmer auf die jeweiligen Aufenthaltsbereiche. Die Zuordnung basiert auf den Ortskoordinaten der weiteren Verkehrsteilnehmer 2 sowie den Ortskoordinaten der jeweiligen Aufenthaltsbereiche 3. Die in die einzelnen Aufenthaltsbereiche 3 einsortierten weiteren Verkehrsteilnehmer 2 werden anschließend klassifiziert und anhand der Klassifizierung und dem betrachteten Aufenthaltsbereich 3 priorisiert. Als Funktion des Aufenthaltsbereiches 3 und der erfolgten Priorisierung wird dann in Abstufung gemäß der Priorisierung für die weiteren Verkehrsteilnehmer 2 eine Kollisionswahrscheinlichkeit errechnet. Es ist möglich, dass innerhalb des Verfahrens für Verkehrsteilnehmer 2 mit einer niedrigen Priorisierung keine Berechnung der Kollisionswahrscheinlichkeit erfolgt, da auf Basis des festgelegten Aufenthaltsbereiches 3 und der Klassifizierung von diesen Verkehrsteilnehmern 2 keine Kollisionsgefahr ausgeht. Des Weiteren können weitere Kriterien, wie das aktuelle Fahrverhalten des sich bewegenden Fahrzeuges 1 oder das aktuelle Bewegungsprofil der weiteren Verkehrsteilnehmer 2 zur Feinjustage der Priorisierung verwendet werden. Als Funktion der erhaltenen Kollisionswahrscheinlichkeit kann dann entweder eine Warnung ausgegeben oder aber das Fahrverhalten des sich bewegenden Fahrzeuges 1 geändert werden. Letzteres kann beispielsweise durch eine Änderung der Fahrtrichtung oder aber durch einen Bremsvorgang erfolgen.

Die Figur 8 zeigt schematisch eine erfindungsgemäße Ausgestaltung eines erfindungsgemäßen Fahrzeuges 1 mit einem erfindungsgemäßen Fahrunterstützungssystem. Dargestellt ist ein Fahrzeug, welches Front- 12 und Seitensensoren 13 sowie ein GPS-Modul 11 zur Positionsbestimmung aufweist. Durch das GPS-Modul 11 kann beispielsweise auch die derzeitige Einordnung auf einer Straßenkarte erfolgen, welches die Stra-ßenumgebung der aktuellen Position des Fahrzeuges definiert. So können beispielsweise der Straßenverlauf und das Vorliegen von Einmündungen, Kreuzungen oder Geschwindigkeitsbeschränkungen die Wahl der räumlichen Ausdehnung und Lage der Aufenthaltsbereiche beeinflussen. Des Weiteren weist das Fahrzeug eine Steuereinheit 10 in Form einer ECU Electronic Control Unit, 10 auf und die einzelnen Komponenten des Systems stehen zumindest über die Steuereinheit 10 in elektrischer Verbindung. Die ECU 10 ist eingerichtet, die erforderlichen Schritte des erfindungsgemäßen Verfahrens auszuführen und unter Verwendung der Sensordaten und der aktuellen Verkehrssituation eine Auswahl zwischen den unterschiedlichen Verkehrsteilnehmern 2 zu treffen, so dass beispielsweise nur die Teilnehmer 2 in der Kollisionsüberwachung behandelt werden, von denen eine direkte Kollisionsgefahr ausgeht.

### Bezugszeichen

- 1: sich bewegendes Fahrzeug
- 2: weitere Verkehrsteilnehmer
- 3: Aufenthaltsbereich
- 10: ECU
- 11: GPS-Modul
- 12: Seitensensoren
- 13: Frontsensoren

## Patentansprüche

1. Verfahren zur Vermeidung von Kollisionen eines sich bewegenden Fahrzeuges (1) mit weiteren Verkehrsteilnehmern (2) in der Fahrzeugumgebung, mindestens umfassend die Verfahrensschritte:
a) Erfassen der Fahrzeugumgebung und der darin befindlichen weiteren Verkehrsteilnehmer (2) mittels eines oder mehrerer Sensoren (12, 13);
b) Aufteilen der Fahrzeugumgebung in mehrere Aufenthaltsbereiche (3);
c) Klassifizieren der im Verfahrensschritt a) erfassten weiteren Verkehrsteilnehmer (2), wobei durch die Klassifizierung jedem der weiteren Verkehrsteilnehmer (2) mindestens eine Verkehrsteilnehmergruppe zugeordnet wird;
d) Priorisierung der im Verfahrensschritt c) klassifizierten Verkehrsteilnehmer (2) unter Berücksichtig sowohl der im Verfahrensschritt c) erfolgten Klassifizierung als auch des im Verfahrensschritt b) definierten Aufenthaltsbereiches, wobei Verkehrsteilnehmern (2) aus einer oder mehreren vorbestimmten Verkehrsteilnehmergruppen in dem jeweiligen Aufenthaltsbereich eine hohe und Verkehrsteilnehmer (2) aus anderen, nicht vorbestimmten Verkehrsteilnehmergruppen in dem jeweiligen Aufenthaltsbereich eine niedrigere Priorität zuerkannt wird; und
e) Bestimmung der Kollisionswahrscheinlichkeit der weiteren Verkehrsteilnehmer (2) mit dem Fahrzeug (1), wobei die Bestimmung der Kollisionswahrscheinlichkeit in Abhängigkeit von der im Verfahrensschritt d) erfolgten Priorisierung erfolgt und die Kollisionswahrscheinlichkeit der weiteren Verkehrsteilnehmer (2) mit hoher Priorität zuerst bestimmt wird;
f) Ändern oder Beibehalten des aktuellen Fahrverhalten des Fahrzeuges (1) auf Basis der im Verfahrensschritt e) bestimmten Kollisionswahrscheinlichkeiten.

2. Verfahren nach Anspruch 1, wobei die Aufteilung der Aufenthaltsbereiche (3) im Verfahrensschritt b) unter Verwendung einer Umgebungskarte der aktuellen Fahrzeugumgebung des Fahrzeuges (1) erfolgt.

3. Verfahren nach einem der vorhergehenden Ansprüche, wobei die Aufteilung der Fahrzeugumgebung im Verfahrensschritt b) als Funktion der Geschwindigkeit des Fahrzeuges (1) erfolgt.

4. Verfahren nach einem der vorhergehenden Ansprüche, wobei die Aufteilung der Fahrzeugumgebung im Verfahrensschritt b) symmetrisch zur Fahrzeugbewegungsrichtung in mindestens 3 unterschiedliche Aufenthaltsbereiche (3) erfolgt.

5. Verfahren nach einem der vorhergehenden Ansprüche, wobei die Priorisierung der weiteren Verkehrsteilnehmer (2) im Verfahrensschritt d) zusätzlich unter Berücksichtigung des aktuellen Bewegungsprofils des weiteren Verkehrsteilnehmers (2) erfolgt.

6. Verfahren nach einem der vorhergehenden Ansprüche, wobei die Bestimmung der Kollisionswahrscheinlichkeit im Verfahrensschritt e) für weitere Verkehrsteilnehmer (2) mit niedrigerer Priorität nicht durchgeführt wird.

7. Verfahren nach einem der vorhergehenden Ansprüche, wobei die Verkehrsteilnehmergruppen im Verfahrensschritt c) ausgesucht sind aus der Gruppe bestehend aus Fußgängern, Elektro-Scooter, elektrischen oder nicht elektrischen Fahrrädern, PKW, LKW.

8. Verfahren nach einem der vorhergehenden Ansprüche, wobei die Sensoren (11, 12, 13) in Verfahrensschritt a) ausgesucht sind aus der Gruppe bestehend aus optischen Sensoren, LIDAR, Radar, GPS oder Kombinationen mindestens zweier Sensortypen daraus.

9. Fahrunterstützungssystem, mindestens aufweisend eine Steuereinheit (10), einen Front- (13) und einen seitlichen Sensor (12), wobei die Steuereinheit (10) im elektrischen Kontakt zu den Sensoren (12, 13) steht und wobei die Steuereinheit (10) dazu eingerichtet ist das Verfahren nach einem der Ansprüche 1-8 auszuführen.

10. Fahrunterstützungssystem nach Anspruch 9, weiterhin aufweisend ein GPS-Modul (11), wobei die Steuereinheit (10) im elektrischen Kontakt zum GPS-Modul (11) steht.

11. Fahrzeug (1) mit einem Fahrunterstützungssystem nach Anspruch 10.

## Claims

1. Method for avoiding collisions of a moving vehicle (1) with other road users (2) in the surroundings of the vehicle, comprising at least the method steps of:
a) detecting, by means of one or more sensors (12, 13), the vehicle surroundings and the other road users (2) located therein;
b) dividing the vehicle surroundings into multiple potentially occupied areas (3);
c) classifying the other road users (2) detected in method step a), wherein, by means of the classification, at least one road user group is assigned to each of the other road users (2);
d) prioritizing the road users (2) classified in method step c), taking into consideration both the classification carried out in method step c) and the potentially occupied area defined in method step b), wherein road users (2) from one or more predetermined road user groups in the particular potentially occupied area are given a high priority and road users (2) from other, non-predetermined road user groups in the particular potentially occupied area are given a lower priority; and
e) determining the probability of collision of the other road users (2) with the vehicle (1), wherein the collision probability is determined in accordance with the prioritization carried out in method step d) and the collision probability of the other road users (2) having a high priority is determined first;
f) changing or maintaining the current driving behaviour of the vehicle (1) on the basis of the collision probabilities determined in method step e).

2. Method according to Claim 1, wherein the division of the potentially occupied areas (3) in method step b) takes place making use of a surroundings map of the current vehicle surroundings of the vehicle (1).

3. Method according to either of the preceding claims, wherein the division of the vehicle surroundings in method step b) takes place as a function of the speed of the vehicle (1).

4. Method according to one of the preceding claims, wherein the division of the vehicle surroundings in method step b) takes place symmetrically with respect to the vehicle movement direction in at least 3 different potentially occupied areas (3).

5. Method according to one of the preceding claims, wherein the prioritization of the other road users (2) in method step d) takes place additionally while giving consideration to the current movement profile of the other road user (2).

6. Method according to one of the preceding claims, wherein the determination of the collision probability in method step e) is not carried out for other road users (2) having lower priority.

7. Method according to one of the preceding claims, wherein the road user groups in method step c) are selected from the group consisting of pedestrians, electric scooters, electric or non-electric bicycles, cars and trucks.

8. Method according to one of the preceding claims, wherein the sensors (11, 12, 13) in method step a) are selected from the group consisting of optical sensors, lidar, radar, GPS or combinations of at least two sensor types.

9. Driving assistance system comprising at least a control unit (10), a front sensor (13) and a side sensor (12), wherein the control unit (10) is in electrical contact with the sensors (12, 13), and wherein the control unit (10) is configured to carry out the method according to one of Claims 1-8.

10. Driving assistance system according to Claim 9, further comprising a GPS module (11), wherein the control unit (10) is in electrical contact with the GPS module (11) .

11. Vehicle (1) having a driving assistance system according to Claim 10.

## Revendications

1. Procédé pour éviter les collisions d'un véhicule (1) qui se déplace avec d'autres usagers de la route (2) dans l'environnement du véhicule, comprenant au moins les étapes suivantes :
a) détection de l'environnement du véhicule et des autres usagers de la route (2) qui s'y trouvent au moyen d'un ou de plusieurs capteurs (12, 13) ;
b) division de l'environnement du véhicule en plusieurs zones de séjour (3) ;
c) classification des autres usagers de la route (2) détectés à l'étape a), au moins un groupe d'usagers de la route étant affecté à chacun des autres usagers de la route (2) par la classification ;
d) priorisation des usagers de la route (2) classifiés à l'étape c) en tenant compte à la fois de la classification effectuée à l'étape c) et de la zone de séjour définie à l'étape b), une priorité élevée étant accordée aux usagers de la route (2) d'un ou de plusieurs groupes d'usagers de la route prédéterminés dans la zone de séjour respective et une priorité plus faible aux usagers de la route (2) d'autres groupes d'usagers de la route non prédéterminés dans la zone de séjour respective ; et
e) détermination de la probabilité de collision des autres usagers de la route (2) avec le véhicule (1), la détermination de la probabilité de collision s'effectuant en fonction de la priorisation effectuée à l'étape d) et la probabilité de collision des autres usagers de la route (2) ayant une priorité élevée étant déterminée en premier ;
f) modification ou maintien du comportement de conduite actuel du véhicule (1) sur la base des probabilités de collision déterminées à l'étape e).

2. Procédé selon la revendication 1, la division en zones de séjour (3) à l'étape b) étant effectuée en utilisant une carte d'environnement de l'environnement actuel du véhicule (1).

3. Procédé selon l'une des revendications précédentes, la division de l'environnement du véhicule à l'étape b) étant effectuée en fonction de la vitesse du véhicule (1) .

4. Procédé selon l'une des revendications précédentes, la division de l'environnement du véhicule à l'étape b) étant effectuée de manière symétrique par rapport au sens de déplacement du véhicule en au moins 3 zones de séjour (3) différentes.

5. Procédé selon l'une des revendications précédentes, la priorisation des autres usagers de la route (2) à l'étape d) étant en plus effectuée en tenant compte du profil de déplacement actuel de l'autre usager de la route (2).

6. Procédé selon l'une des revendications précédentes, la détermination de la probabilité de collision à l'étape e) n'étant pas effectuée pour les autres usagers de la route (2) ayant une priorité plus faible.

7. Procédé selon l'une des revendications précédentes, les groupes d'usagers de la route à l'étape c) étant choisis dans le groupe constitué des piétons, des trottinettes électriques, des vélos électriques ou non électriques, des voitures, des camions.

8. Procédé selon l'une des revendications précédentes, les capteurs (11, 12, 13) à l'étape a) étant choisis dans le groupe constitué de capteurs optiques, LIDAR, radar, GPS ou de combinaisons d'au moins deux types de capteurs parmi ceux-ci.

9. Système d'assistance à la conduite possédant au moins une unité de commande (10), un capteur frontal (13) et un capteur latéral (12), l'unité de commande (10) étant en contact électrique avec les capteurs (12, 13) et l'unité de commande (10) étant conçue pour mettre en œuvre le procédé selon l'une des revendications 1-8.

10. Système d'assistance à la conduite selon la revendication 9, possédant en outre un module GPS (11), l'unité de commande (10) étant en contact électrique avec le module GPS (11).

11. Véhicule (1) comprenant un système d'assistance à la conduite selon la revendication 10.
